# EUROPEAN PATENT APPLICATION

(11) **EP 2 372 657 A2**
(43) Date of publication of application: **05.10.2011**
(21) Application number: 11157988.4
(22) Date of filing: 14.03.2011
(51) Int. Cl.: G06T 11/20, G06T 13/80

(54) **Information display apparatus and computer-readable medium**

(30) Priority: 31.03.2010 JP 2010079985
(71) Applicant: Casio Computer Co., Ltd., Tokyo 151-8543 (JP)
(72) Inventor: Sakurai, Takayuki, Hamura-shi Tokyo 205-8555 (JP)
(74) Representative: Grünecker, Kinkeldey, Stockmair & Schwanhäusser Anwaltssozietät

(57) **Abstract**

The apparatus includes: an image file storing unit configured to store at least one image file including a plurality of image data; an image file specifying unit configured to specify one of the at least one image file according to a user operation; an image display controller configured to display, on a display screen, one of the plurality of image data included in the specified image file; a plotting operation receiver configured to receive a user plotting operation that is performed on a targeted analysis point in the displayed image data, wherein a plot point is plotted on the display screen according to the user plotting operation; and a plotting display controller configured to sequentially display the plurality of image data included in the specified image file while displaying a plurality of plot points plotted on the display screen according to a plurality of user plotting operations.

## Description

The present application is based upon and claims priority from prior Japanese Patent Application No. 2010-079985, filed on March 31, 2010, the entire content of which are incorporated herein by reference.

### BACKGROUND

### Technical Field

The present disclosure relates to an information display apparatus and a computer-readable medium.

### Related Art

Among a related art information display apparatus which display, for example, a graph of a function formula are ones which can display an image as a background of a graph for the purpose of enhancing the learning efficiency by correlating the content of the graph with an event in real life (see e.g., JP-A-2003-131655). For example, in such information display apparatus, the user can easily understand that a jetted-out water flow forms a parabolic shape if an image a spring taken from the side and a graph of a parabolic curve are displayed in superimposition.

Incidentally, one method of using such an information display apparatus for learning is as follows. Plural images obtained by taking an object such as a ball consecutively are displayed one by one in order and a variation of object positions (analysis subject points) in the respective images is acquired as a locus and used for an analysis. This use method makes it possible to analyze what the locus of the object positions (analysis subject points) means mathematically.

However, in a related-art information display apparatus, to acquire a locus of object positions from plural images taken consecutively, it is necessary to open files of the shot images one by one, acquire coordinates of an object position from each image, and input the acquired sets of coordinates to a table or the like. Necessary operations take much time and labor.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any of the disadvantages described above.

It is an illustrative aspect of the present invention to provide an information display apparatus and a computer readable medium, which can easily acquire a locus of analysis subject points in plural respective images.

According to one or more illustrative aspects of the present invention, there is provided an information display apparatus. The apparatus includes: an image file storing unit configured to store at least one image file including a plurality of image data; an image file specifying unit configured to specify one of said at least one image file according to a user operation; an image display controller configured to display, on a display screen, one of the plurality of image data included in the specified image file; a plotting operation receiver configured to receive a user plotting operation that is performed on a targeted analysis point in the displayed image data, wherein a plot point is plotted on the display screen according to the user plotting operation; and a plotting display controller configured to sequentially display the plurality of image data included in the specified image file while displaying a plurality of plot points plotted on the display screen according to a plurality of user plotting operations.

According to one or more illustrative aspects of the present invention, the apparatus further includes: a coordinate system setting unit configured to set, on the display screen, a coordinate system represented by first and second coordinate axes; and a graph display controller configured to: i) acquire coordinates of the plurality of plot points in the coordinate system; ii) calculate a fitted line corresponding to the plurality of plot points; and iii) display the calculated fitted line in the coordinate system.

According to one or more illustrative aspects of the present invention, the image file has coordinate range data representing a coordinate system range that is set according to an image display area of the display screen, and the coordinate system setting unit is configured to set a coordinate system having the coordinate system range in the image display area of the display screen.

According to one or more illustrative aspects of the present invention, the image file storing unit includes: a coordinates storing unit configured to store the coordinates of the plot points in the specified image file, wherein the coordinates are stored in a data table form, and the graph display controller is configured to acquire the coordinates of the plot points from the coordinates storing unit.

According to one or more illustrative aspects of the present invention, the coordinate system setting unit is configured to set, on the display screen, a second coordinate system represented by at least one of the first and second coordinate axes and a third coordinate axis that is different from the first and second coordinate axes. The coordinates storing unit is configured to store coordinates on the third coordinate axis of the plot points such that the coordinates on the third coordinate axis are correlated with the coordinates on the first and second coordinate axes. The graph display controller is configured to acquire the coordinates of the plot points in the second coordinate system from the coordinates storing unit. The information display apparatus further includes: a second graph display controller configured to: i) calculate a fitted line corresponding to the plot points in the second coordinate system; and ii) display the calculated fitted line in the second coordinate system.

According to one or more illustrative aspects of the present invention, the image file storing unit is configured to store an image file including only one image data. When the image file specifying unit specifies the image file having the only one image data, the plotting display controller continue to display the only one image data while displaying the plurality of plot points plotted on the display screen according to the plurality of user plotting operations.

According to one or more illustrative aspects of the present invention, there is provided a computer readable medium storing a program for causing the computer to perform following operations:
(a) storing at least one image file including a plurality of image data;
(b) specifying one of said at least one image file according to a user operation;
(c) displaying, on a display screen, one of the plurality of image data included in the specified image file;
(d) receiving a user plotting operation that is performed on a targeted analysis point in the displayed image data, wherein a plot point is plotted on the display screen according to the user plotting operation; and
(e) sequentially displaying the plurality of image data included in the specified image file while displaying a plurality of plot points plotted on the display screen according to a plurality of user plotting operations.

According to one or more illustrative aspects of the present invention, there is provided an information display apparatus.
The apparatus comprises:
a display unit having a touch panel;
a memory; and
a processor provided to be accessible to the memory, the processor being operable to perform operations comprising:
   (a) storing at least one image file including a plurality of image data;
   (b) specifying one of said at least one image file according to a user operation;
   (c) displaying, on a display screen, one of the plurality of image data included in the specified image file;
   (d) receiving a user plotting operation that is performed on a targeted analysis point in the displayed image data, wherein a plot point is plotted on the display screen according to the user plotting operation; and
   (e) sequentially displaying the plurality of image data included in the specified image file while displaying a plurality of plot points plotted on the display screen according to a plurality of user plotting operations.

Other aspects of the invention will be apparent from the following description, the drawings and the claims.

### BRIEF DESCRIPTION OF THE DRAWINGS

Fig. 1 is a plan view showing an appearance of a scientific calculator;
Fig. 2 is a block diagram showing the functional configuration of the scientific calculator;
Fig. 3 is a table showing data structures of image files;
Figs. 4A-4G show images of respective image data;
Fig. 5 is a flowchart of an information display process;
Fig. 6 is a flowchart of a plural image plotting mode process;
Fig. 7 is a flowchart of a single image plotting mode process;
Figs. 8A-8D illustrate an example operation of a plural image plotting mode process;
Figs. 9A-9D illustrate an example operation of a single image plotting mode process; and
Figs. 10A-10D illustrate example fitted formula display operations.

### DETAILED DESCRIPTION OF EXEMPLARY EMBODIMENTS

An embodiment of the present invention will be hereinafter described in detail with reference to the accompanying drawings. However, the scope of the invention is not limited to the illustrated embodiment.

### [1.1 Appearance]

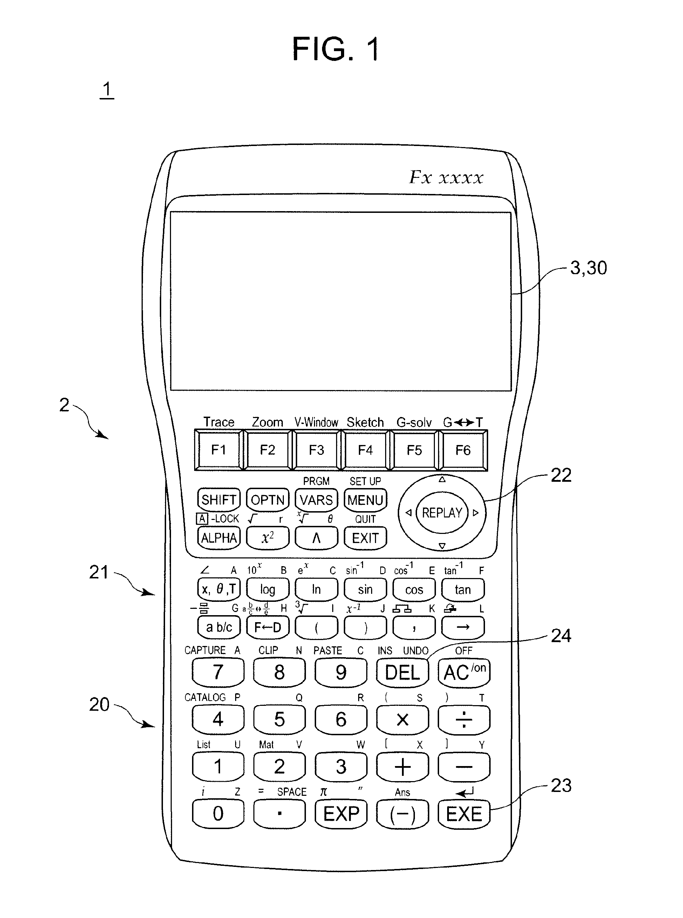

Fig. 1 is a plan view showing an appearance of a scientific calculator 1 as an information display apparatus according to the invention. As shown in Fig. 1, the scientific calculator 1 is equipped with various input keys 2 and a display 3.

The input keys 2 are keys for receiving, from the user, operations for inputting constituent elements of a mathematical formula such as numerical values and operation symbols and commanding operations for various kinds of processing. The input keys 2 are assigned specific functions, respectively. In the embodiment, the input keys 2 include ten-keys 20, operation symbol keys 21, a cursor key 22, an EXE key 23, a delete key 24, etc.

Among the input keys 2, the ten-keys 20 are keys for receiving operations for inputting a numerical value. The operation symbol keys 21 are keys for receiving operations for inputting various operation symbols such as the symbols of the four operations, the parentheses, the division symbol, the radical sign, the logarithm symbols, constants (pi (π), light speed c, etc.), the trigonometric function symbols.

The cursor key 22 is a key that is pressed in, for example, moving, in any of prescribed directions, the cursor that indicates an edit subject position or a selection subject position on the display 3. In the embodiment, the cursor key 22 is operated to command a movement in any of the four directions (up, down, rightward, and leftward).

The EXE key 23 is a key for receiving an operation for commanding execution of processing or determination. For example, the EXE key 23 serves as a key for commanding execution of an operation after input of a mathematical formula. The delete key 24 is a key for receiving an operation for deleting a numerical value, an operation symbol, or the like displayed on the display 3.

The display 3, which is an LCD (liquid crystal display), an ELD (electroluminescent display), or the like, displays characters, symbols, a mathematical formula, a calculation result, etc. according to operations on the input keys 2 etc. and also displays various data that are necessary for use of the scientific calculator 1. In the embodiment, the display 3 can display plural layers in superimposition. In the embodiment, a touch screen 30 is formed on the entire display screen of the display 3.

### [1.2 Functional configuration]

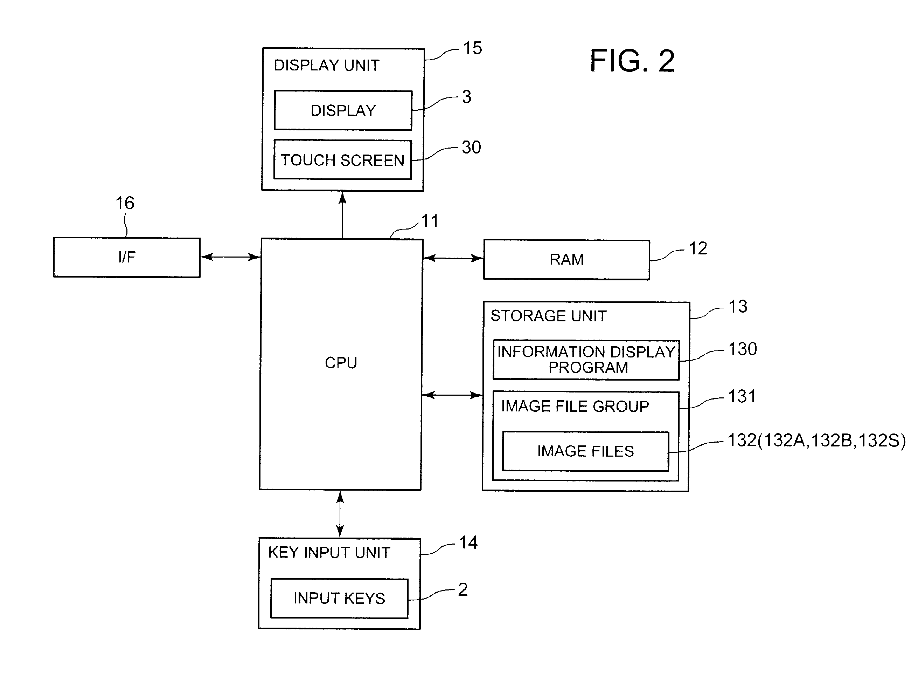

Next, the functional configuration of the scientific calculator 1 will be now described. Fig. 2 is a block diagram showing a general functional configuration of the scientific calculator 1.

As shown in Fig. 2, the scientific calculator 1 is composed of a key input unit 14, a display unit 15, an interface 16, a RAM (random access memory) 12, a storage unit 13, and a CPU (central processing unit) 11.

The key input unit 14, which is equipped with the above-described input keys 2, outputs, to the CPU 11, an operation signal corresponding to a key pressed.

The display unit 15 is equipped with the above-described display 3. The display unit 15 displays various information, according to a display signal that is supplied from the CPU 11. Also, the display 3 is equipped with the touch screen 30. The display unit 15 outputs, to the CPU 11, information indicating a contact position of an input pen with respect to the display screen.

The interface 16 is a connection terminal for connection to an external apparatus (not shown). In the embodiment, an image file 132 (described later) or the like can be read from an external apparatus via a USB cable or the like and stored in the storage unit 13. The interface 16 may be used for reading data from a storage medium such as a card medium.

The RAM 12 is a volatile memory which stores information temporarily, and has plural work areas for storing various programs to be or being run, data relating to the various programs, and other information.

The storage unit 13 is a nonvolatile memory such as a ROM (read-only memory) and is stored with various programs and various data. More specifically, storage unit 13 is stored with an information display program 130 which is a program according to the invention and an image file group 131.

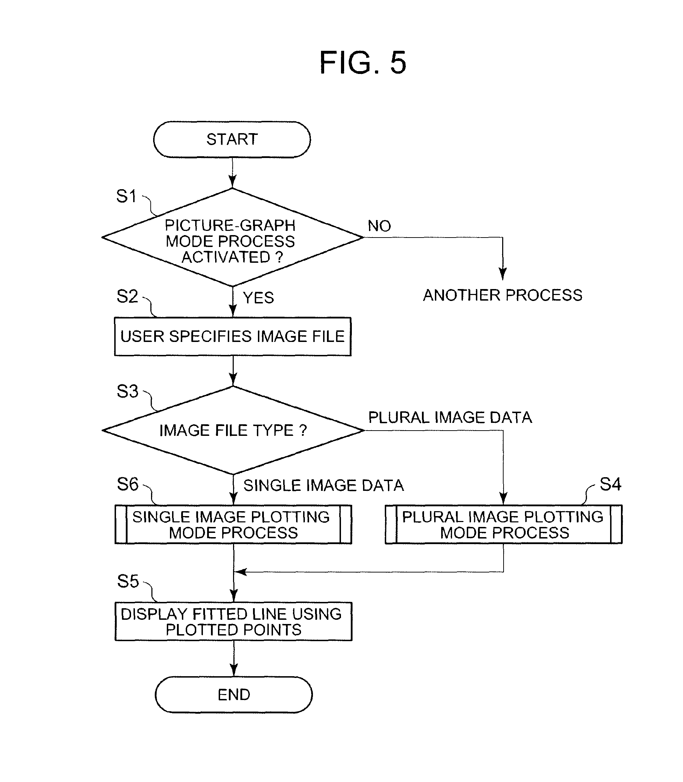

The information display program 130 is a program for causing the CPU 11 to execute an information display process (described later with reference to Fig. 5).

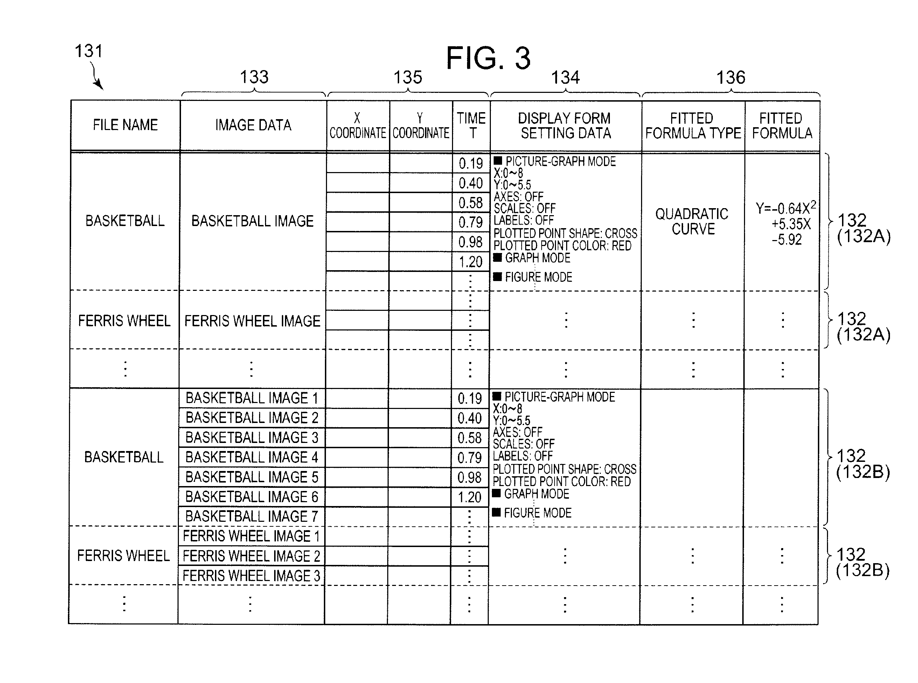

The image file group 131 includes plural image files 132. More specifically, as shown in Fig. 3, the image file group 131 includes at least one image file 132 (hereinafter referred to as a single-image-data file 132A) having single image data 133 and at least one image file 132 (hereinafter referred to as a plural-image-data file 132B) having plural image data 133. In each image file 132, image data 133, display form setting data 134, a coordinate data table 135, and fitted line data 136 are correlated with each other. For the sake of simplification, an image of each image data 133 is not shown in Fig. 3.

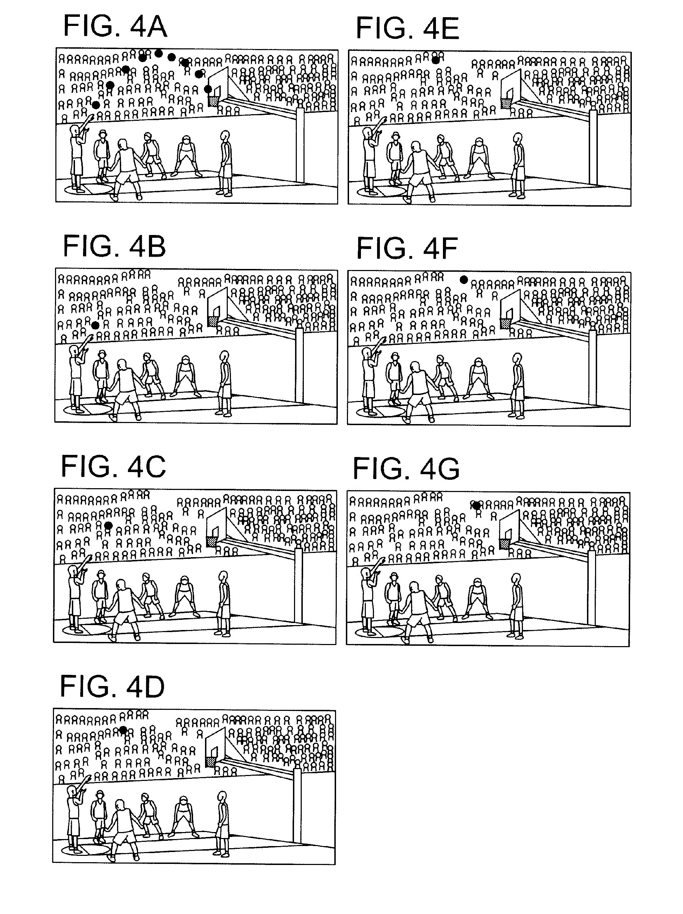

Among the above various data and table, the image data 133 are data of images that can be displayed so as to be superimposed on a coordinate system and represents a prescribed shape (e.g., parabola and straight line) that can be fitted by a graph. More specifically, for example, as shown in Fig. 4A, the image of image data 133 of a single-image-data file 132A is an image obtained by combining results of consecutive shooting of a ball (moving object) together and a prescribed shape is expressed by a set of object positions (analysis subject points). On the other hand, for example, as shown in Figs. 4B-4G, the images of image data 133 of a plural-image-data file 132B are images of respective results of consecutive shooting of a ball (moving object) and a prescribed shape is expressed by a set of object positions (analysis subject points) in the respective images. The image of image data 133 may be an image of a non-real event such as a drawn image. The prescribed shapes that can be fitted by a graph are not limited to a parabola and a straight line and may include other shapes.

The display form setting data 134 are data that indicate a display form of the display 3 for each of image displayable modes, that is, a picture-graph mode, a graph mode, and a figure mode. The picture-graph mode is a mode in which plotted points are displayed so as to be superimposed on an image. In the graph mode, a graph is displayed so as to be superimposed on a single image. In the figure mode, a figure drawn by the user is displayed so as to be superimposed on an image.

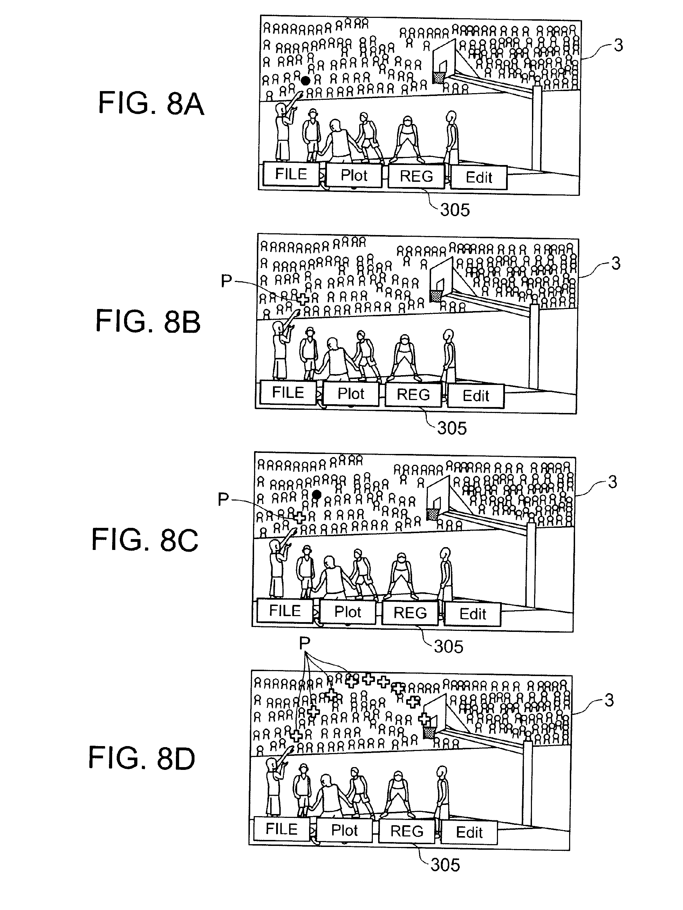

The display form setting data 134 include, as information about an image display form in each of the picture-graph mode and the graph mode, an XY coordinate system range (upper limits and lower limits of X/Y axes) that should be set for an image display area of the display screen and information of scale spacings. The display form setting data 134 also include, as information about an image display form in each of the picture-graph mode and the graph mode, pieces of setting information indicating whether to display coordinate axes (item "axes" in Fig. 3), whether to display scales (item "scales" in Fig. 3), whether to display coordinate axis labels (X/Y coordinate axis names and the origin "O"; item "labels" in Fig. 3), and other things and pieces of setting information indicating a color and a shape of plotted points P (see Fig. 8) that are displayed in the information display process (described later with reference to Fig. 5).

The coordinate data table 135 serves to contain X/Y coordinates of each plotted point P, preferably, coordinates in a coordinate system that is defmed by the X/Y axes and another coordinate axis (e.g., Z axis or T axis) in the information display process (described later with reference to Fig. 5).

In the coordinate data table 135 of a plural-image-data file 132B, one set of coordinates is correlated with each image data 133 and hence the number of data rows of the coordinate data table 135, that is, the number of sets of coordinates that can be contained in the coordinate data table 135, is equal to the number of image data 133 of the image file 132B. On the other hand, in the coordinate data table 135 of a single-image-data file 132A, plural sets of coordinates are correlated with one image data 133 and hence the number of data rows of the coordinate data table 135 is equal to a number (e.g., the number of images combined) that is set by the user or set in advance when the file 132A is generated.
Coordinates on an additional axis (e.g., Z axis or T axis) that is different from the X/Y coordinate axes may be either set by the user in the scientific calculator 1 or set in advance when the image file 132 was generated in an external apparatus. In each coordinate data table 135 shown in Fig. 3, the T axis (time axis) is employed as an example of the additional axis that is different from the X/Y coordinate axes and coordinates on that axis are set. In a plural-image-data file 132B, coordinates on the T axis are elapsed times from a certain reference time when the image data 133 were taken. In a single-image-data file 132A, a coordinate on the T axis is an elapsed time from a reference time that is a shooting time of a certain analysis subject point of the image data 133.
More specifically, in each of plural-image-data files 132B having respective file names "basketball" and "Ferris wheel," the image data 133 are, for example, photographs that were taken consecutively and the coordinates on the T axis in the coordinate data table 135 are elapsed times of times when the respective images were taken. In each of single-image-data files 132A having respective file names "basketball" and "Ferris wheel," the single image data is, for example, a combined image including a locus of moving points of photographs taken consecutively and the coordinates on the T axis in the coordinate data table 135 are elapsed times of times when the respective moving points were taken.

The fitted line data 136 are data of a fitted line of a set (locus) of plotted points P and indicates a type of fitted line and a fitted formula. Examples of the type of fitted line are a quadratic curve, a cubic curve, a logarithmic curve, and an exponential curve. In the embodiment, the fitted line data 136 are set in the information display process (described later with reference to Fig. 5).

The CPU 11 supervises the individual units of the scientific calculator 1. More specifically, the CPU 11 develops, in the RAM 12, a system program and a specified one of various application programs that are stored in the storage unit 13 and performs various kinds of processing in cooperation with the programs developed in the RAM 12.

### [1.3 Operation of scientific calculator]

Next, a description will be made of how the scientific calculator 1 operates.

Fig. 5 is a flowchart of the information display process. The information display process is executed by the information display program 130 and the CPU 11 that cooperate with each other after an instruction to execute the information display process is given by the user through the touch screen 30 or the key input unit 14 and the information display program 130 is read from the storage unit 13 and developed in the RAM 12 as appropriate.

In the information display process shown in Fig. 5, first, at step S1, the CPU 11 determines whether or not an operation for activating a picture-graph mode process has been made. If no such operation has been made (S 1: No), a transition is made to another process.

If determining that an operation for activating a picture-graph mode process has been made (S 1: Yes), at step S2 the CPU 11 causes the user to specify one image file 132 of the image file group 131. At step S3, the CPU 11 determines the type of the specified image file 132 (hereinafter referred to as a specified image file 132S). In the embodiment, step S2 is a step that the user specifies an image file 132 through the input keys 2. Alternatively, the user may specify an image file 132 through the touch screen 30. At step S3, the CPU 11 determines whether the specified image file 132S is a single-image-data file 132A or a plural-image-data file 132B.

If determining at step S3 that the specified image file 132S is a plural-image-data file 132B, at step S4 the CPU 11 executes a plural image plotting mode process.

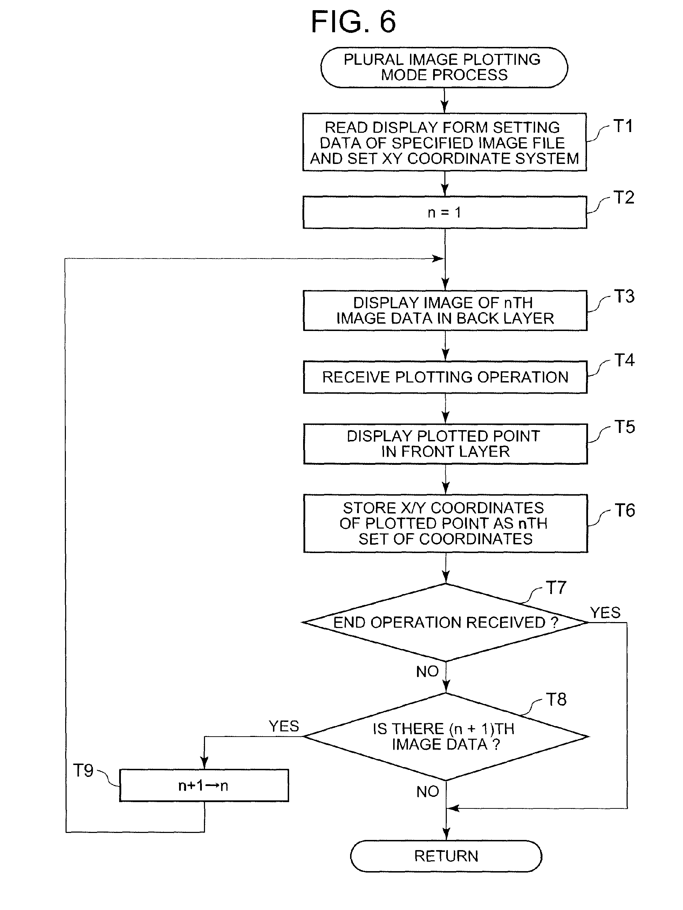

More specifically, in the plural image plotting mode process shown in Fig. 6, first, at step T1, the CPU 11 sets X/Y axes and an XY coordinate system defined by the X/Y axes in a front layer of the display screen of the display 3 on the basis of the display form setting data 134 of the specified image file 132S. More specifically, the CPU 11 reads the XY coordinate system setting range from the display form setting data 134 and sets an XY coordinate system having the read-out setting range in an image display area of the front layer. If the display form setting data 134 include setting information to the effect that coordinate axes should be displayed, the CPU 111 displays X/Y axes in the front layer.

At step T2, the CPU 11 sets the value of variable n to "1." At step T3, the CPU 11 displays an image of nth image data 133 of the specified image file 132S on the display 3 in a back layer. If plotted points P are displayed in the front layer as a result of execution of step T5 (described later), at step **T**3 the CPU 11 displays an image in the back layer while maintaining the display of the plotted points **P**.

At step T4, the CPU 11 causes the user to perform a plotting operation on the display screen on which the image of the image data 133 is displayed for a desired analysis subject point in the image. At step T5, the CPU 11 displays a plotted point P at the plotting operation position in the front layer according to the plotting operation. In the embodiment, step T4 is a step that the user performs a plotting operation through the touch screen 30. Alternatively, the user may do so using the cursor key 22 and the EXE key 23. At step T5, the CPU 11 sets a color and a shape of the plotted point P on the basis of the display form setting data 134 of the specified image file 132S. If plotted points P are already displayed at the time of execution of step T5, the CPU 11 displays a new plotted point P while keeping the old plotted points P displayed.

At step T6, the CPU 11 enters X/Y coordinates of the plotted point P in the coordinate data table 135 as an nth set of coordinates. At step T7, the CPU 11 determines whether or not the user has made an operation for ending the plural image plotting mode process.

If determining that no such ending operation has been made (T7: No), the CPU 11 determines at step T8 whether or not the specified image file 132S has (n + 1)th image data 133.

If determining that the specified image file 132S has (n + 1)th image data 133 (T8: Yes), at step T9 the CPU 11 increments the value of variable n by 1. Then, the process returns to step T3.

Steps T3-T9 are thereafter executed repeatedly, whereby the image data 133 to be display-controlled is switched in order in the specified image file 132S and plotting operations are performed on respective images. As a result, plotted points P are displayed at respective plotting operation positions and the set of plotted points P represents a locus of analysis subject points.

If determining that an ending operation has been made (T7: Yes) or (n + 1)th image data 133 does not exist (T8: No), the CPU 11 finishes the plural image plotting mode process.

Upon completion of the plural image plotting mode process, at step S5 (see Fig. 5) the CPU 11 displays a fitted line for the set of plotted points P (locus of the analysis subject points). Then, the information display process is finished. At step S5, after causing the user to specify a type of fitted line (e.g., straight line or quadratic curve), the CPU 11 acquires the sets of coordinates of the respective plotted points P in the XY coordinate system from the coordinate data table 135, calculates a fitted formula of a fitted line for the set (locus) of plotted points P, and displays the fitted formula and the fitted line in the front layer (in the XY coordinate system). Alternatively, the user may input a fitted formula. And the user may edit the displayed fitted formula.

If determining at step S3 that the specified image file 132S is a single-image-data image file 132A, at step S6 the CPU 11 executes a single image plotting mode process.

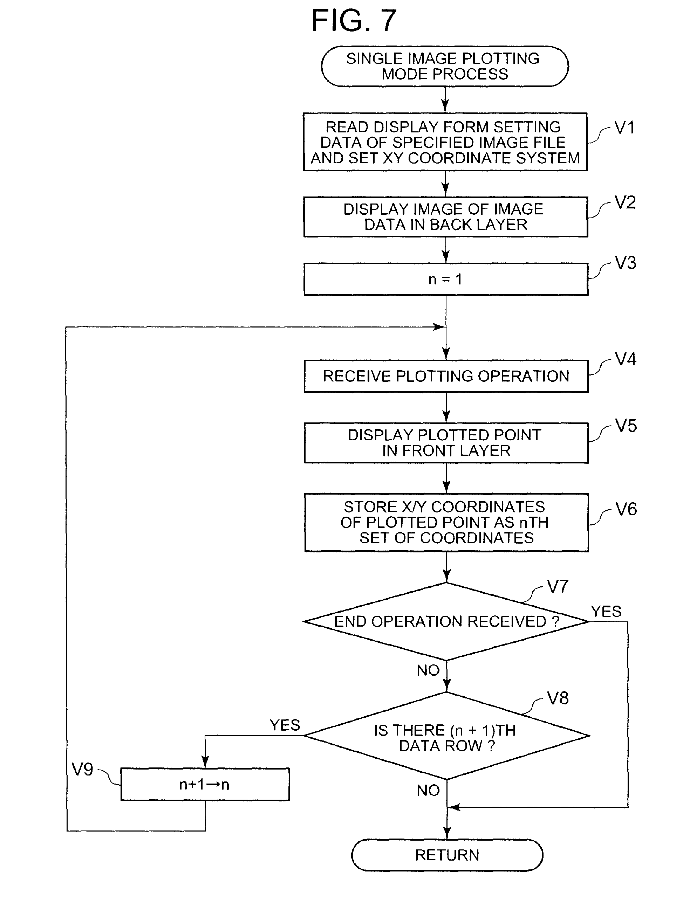

More specifically, in the single image plotting mode process shown in Fig. 7, first, at step V1, the CPU 11 sets X/Y axes and an XY coordinate system defined by the X/Y axes in a front layer of the display screen of the display 3 on the basis of the display form setting data 134 of the specified image file 132S. More specifically, the CPU 11 reads the XY coordinate system setting range from the display form setting data 134 and sets an XY coordinate system having the read-out setting range in an image display area of the front layer. If the display form setting data 134 include setting information to the effect that coordinate axes should be displayed, the CPU 111 displays X/Y axes in the front layer.

At step V2, the CPU 11 displays an image of the image data 133 of the specified image file 132S on the display 3 in a back layer (in the XY coordinate system). At step V3, the CPU 11 sets the value of variable n to "1."

At step V4, the CPU 11 causes the user to perform a plotting operation on the display screen on which the image of the image data 133 is displayed for a desired analysis subject point in the image. At step V5, the CPU 11 displays a plotted point P at the plotting operation position in the front layer according to the plotting operation. In the embodiment, step V4 is a step that the user performs a plotting operation through the touch screen 30. Alternatively, the user may do so using the cursor key 22 and the EXE key 23. At step V5, the CPU 11 sets a color and a shape of the plotted point P on the basis of the display form setting data 134 of the specified image file 132S. If plotted points P are already displayed at the time of execution of step V5, the CPU 11 displays a new plotted point P while keeping the old plotted points P displayed.

At step V6, the CPU 11 enters X/Y coordinates of the plotted point P in the coordinate data table 135 as an nth set of coordinates. At step V7, the CPU 11 determines whether or not the user has made an operation for ending the single image plotting mode process.

If determining that no such ending operation has been made (V7: No), the CPU 11 determines at step V8 whether or not the coordinate data table 135 of the specified image file 132S has an (n + 1)th image data row.

If determining that the coordinate data table 135 has (n + 1)th data row (V8: yes), at step V9 the CPU 11 increments the value of variable n by 1. Then, the process returns to step V4.

Steps V4-V9 are thereafter executed repeatedly, whereby plotting operations are performed sequentially on the image of the image data 133 of the specified image file 132S with the image kept displayed. As a result, plotted points P are displayed at respective plotting operation positions and the set of plotted points P represents a locus of analysis subject points.

If determining that an ending operation has been made (V7: Yes) or the coordinate data table 135 of the specified image file 132S does not have an (n + 1)th data row (V8: No), the CPU 11 finishes the single image plotting mode process.

### [1.4 Example operations]

Next, specific operations of the scientific calculator 1 will be described with reference to the drawings.

### (Example operation 1)

First, if the user performs an operation of activating a picture-graph mode process (S1: Yes) and specifies the plural-image-data file 132B having the file name "basketball" of the image file group 131 (see Fig. 3) at step S2, at step T1 X/Y axes and an XY coordinate system defined by the X/Y axes are set in the front layer of the display screen of the display 3 on the basis of the display form setting data 134 of the specified image file 132S. More specifically, the XY coordinate system setting range "X axis: 0-8, Y axis: 0-5.5" is read from the display form setting data 134 and an XY coordinate system is set in the read-out setting range in an image display area of the front layer. Since the display form setting data 134 have the setting to the effect that coordinate axes need not be displayed, X/Y axes are not displayed in the front layer.

After the value of variable n is set to 1 at step T2, at step T3 an image of the first image data 133 of the specified image file 132S having the file name "basketball" is displayed on the display 3 in the back layer (see Fig. 8A). In the embodiment, an end key 305 for commanding end of the plural image plotting mode process and calculation of a fitted line is displayed on the display 3 as a software key.

If at step T4 the user performs a plotting operation on the display screen on which the image of the image data 133 is displayed for a desired analysis subject point (in this example operation, a position of the ball) in the image, at step T5 a plotted point P is displayed at the plotting operation position in the front layer (see Fig. 8B). In this example operation, since the color and the shape of each plotted point P are set to "red" and "cross," respectively, in the display form setting data 134, a red cross is displayed as a plotted point P.

At step T6, coordinates of the plotted point P in the XY coordinate system are entered in the coordinate data table 135 as a first set of coordinates. If the user does not perform an end operation (T7: No), it is determined that the image data 133 has (n + 1)th image data (T8: Yes). At step T9, the value of variable n is incremented by 1 to "2."

At step T3, an image of the second image data 133 of the specified image file 132S having the file name "basketball" is displayed on the display 3 in the back layer with the old plotted point kept displayed (see Fig. 8C).

If at step T4 the user performs a plotting operation on the display screen on which the image of the image data 133 is displayed for a desired analysis subject point (in this example operation, a position of the ball) in the image, at step T5 a new plotted point P is displayed at the plotting operation position in the front layer with the old plotted point kept displayed.

Steps T3-T9 are thereafter executed repeatedly, whereby the image data 133 to be display-controlled is switched in order in the specified image file 132S having the file name "basketball" and plotting operations are performed on respective images. As a result, plotted points P are displayed at respective plotting operation positions and the set of plotted points P represents a locus of analysis subject points (see Fig. 8D).

### (Example operation 2)

First, if the user performs an operation of activating a picture-graph mode process (S1: Yes) and specifies the single-image-data file 132A having the file name "basketball" in the image file group 131 (see Fig. 3) at step S2, at step V1 X/Y axes and an XY coordinate system defined by the X/Y axes are set in the front layer of the display screen of the display 3 on the basis of the display form setting data 134 of the specified image file 132S. More specifically, the XY coordinate system setting range "X axis: 0-8, Y axis: 0-5.5" is read from the display form setting data 134 and an XY coordinate system is set in the read-out setting range in an image display area of the front layer. Since the display form setting data 134 have the setting to the effect that coordinate axes need not be displayed, X/Y axes are not displayed in the front layer.

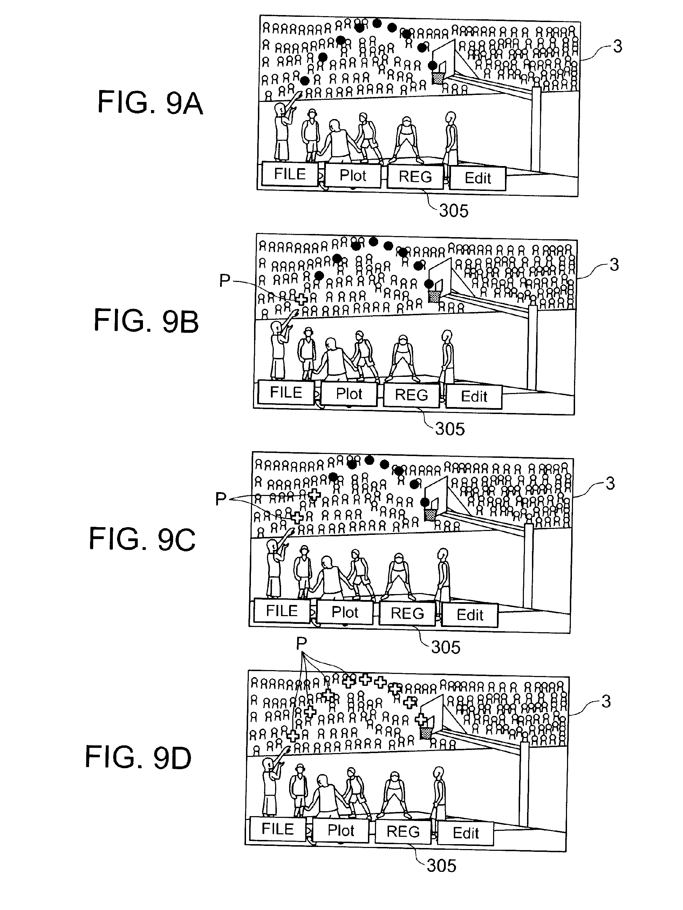

At step V2 an image of the image data 133 of the specified image file 132S having the file name "basketball" is displayed on the display 3 in the back layer (see Fig. 9A). In the embodiment, an end key 305 for commanding end of the single image plotting mode process and calculation of a fitted line is displayed on the display 3 as a software key.

After the value of variable n is set to 1 at step V3, if at step V4 the user performs a plotting operation on the display screen on which the image of the image data 133 is displayed for a desired analysis subject point (in this example operation, a position of the ball) in the image, at step V5 a plotted point P is displayed at the plotting operation position in the front layer (see Fig. 9B). In this example operation, since the color and the shape of each plotted point P are set to "red" and "cross," respectively, in the display form setting data 134, a red cross is displayed as a plotted point P.

At step V6, coordinates of the plotted point P in the XY coordinate system are entered in the coordinate data table 135 as a first set of coordinates. If the user does not perform an end operation (V7: No), it is judged that the coordinate data table 135 of the specified image file 132S has an (n + 1)th data row (V8: Yes). At step V9, the value of variable n is incremented by 1 to "2."

If at step V4 the user performs a plotting operation on the display screen on which the image of the image data 133 is displayed for a desired analysis subject point (in this example operation, a position of the ball) in the image, at step V5 a new plotted point P is displayed at the plotting operation position in the front layer with the old plotted point kept displayed (see Fig. 9C).

Steps V4-V9 are thereafter executed repeatedly (in this example operation, V4-V9 are executed 10 times), whereby plotting operations are performed sequentially on the image of the image data 133 of the specified image file 132S with the image kept displayed. As a result, plotted points P are displayed at respective plotting operation positions and the set of plotted points P represents a locus of analysis subject points (see Fig. 9D).

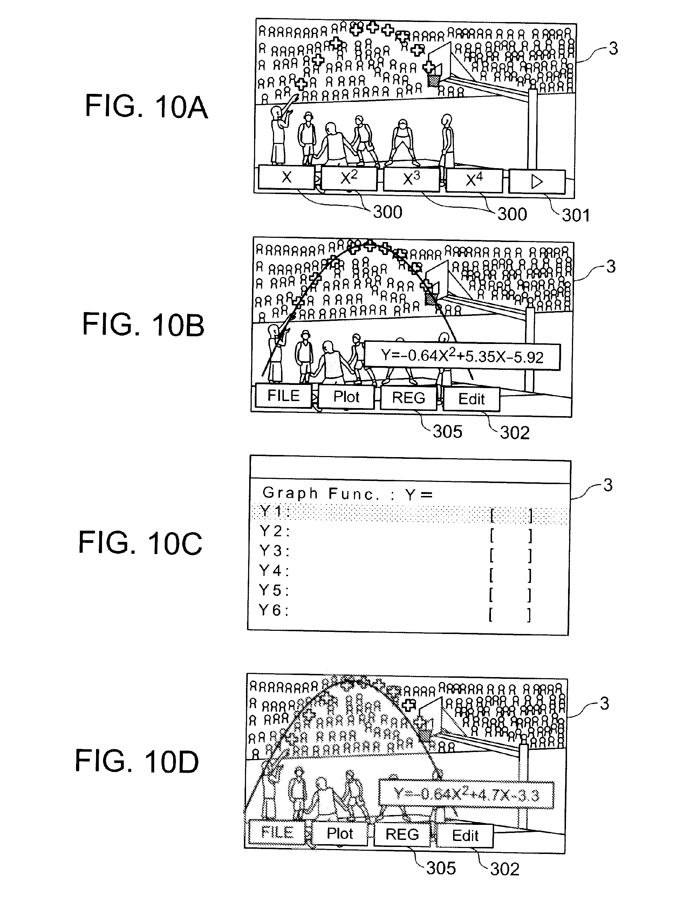

If it is determined that the coordinate data table 135 of the specified image file 132S does not have an 11th data row (V8: no) and then the user specifies that the type of a fitted line should be a quadratic curve using a selection key 300 "X²" shown in Fig. 10A, at step S5 a quadratic curve (fitted line) corresponding to the set of plotted points P (locus of the analysis subject points) and a fitted formula "Y = -0.64X² + 5.35X - 5.92" are displayed (see Fig. 10B).

In this example operation, as shown in the bottom part of Fig. 10A, selection keys 300 "X," "X²," etc. corresponding to a linear graph, a quadratic graph, etc., respectively, and a cursor key 301 for displaying selection keys 300 for other graph types are displayed on the display 3 as software keys. The user selects a type of fitted line using the selection keys and the cursor key 301.

In the state that the fitted formula "Y = -0.64X² + 5.35X - 5.92" of the fitted line is displayed, an edit key 302 for commanding edit of a fitted formula is displayed on the display 3 (see the bottom part of Fig. 10B). If the edit key 302 is operated, the user can input an arbitrary fitted formula and display its graph on the display 3 (see Figs. 10C and 10D).

As described above, in the embodiment, if one image file 132 is specified as a specified image file 132S by a user operation at step S2 (see Fig. 5), an image of image data 133 of the specified image file 132S is displayed on the display screen. If a user plotting operation on the display screen on which the image of the image data 133 is displayed is received for an analysis subject point in the image, a plotted point P is displayed at the plotting position on the display screen. The image data 133 to be display-controlled is switched in order in the specified image file 132S while plotted points P are kept displayed. As a plotting operation is performed on each of images that are displayed sequentially, plotted points P are displayed at respective plotting operation positions and a locus of analysis subject points can be acquired from the set of plotted points P. Therefore, a locus of analysis subject points included in plural respective images can be acquired more easily than in conventional cases.

At step S5 (see Fig. 5), sets of coordinates of plural plotted points P in the XY coordinate system are acquired at step S5 and a fitted line corresponding to the set of plotted points P is calculated and displayed in the XY coordinate system (see Figs. 10A and 10B etc.). This makes it possible to analyze a mathematical meaning of a locus of analysis subject points.

It goes without saying that the details of the individual constituent elements and the operation of the scientific calculator 1 according to the embodiment can be modified as appropriate without departing from the spirit and scope of the invention.

For example, although the embodiment is directed to the scientific calculator 1 as an information display apparatus, the application range of the invention is not limited to such products and encompasses general electronic apparatus such as cell phones, personal computers, PDAs (personal digital assistants), and game machines. In the invention, the information display program 130 may be stored in a memory card, a CD, or the like that can be inserted in and removed from the scientific calculator 1.

Although the embodiment is directed to the case that the Y axis and the X axis are employed as the vertical axis and the horizontal axis, respectively, of a coordinate system, other coordinate axes may be employed. More specifically, although in the embodiment an XY coordinate system is set on the display screen of the display 3 and a fitted line of plotted points P is displayed in the XY coordinate system, a modification is possible in which a coordinate system (XYZ coordinate system, XZ coordinate system, or the like) that is defined by at least one of X and Y axes and another coordinate axis (Z axis, T axis, or the like) is set on the display screen. Sets of coordinates of plural plotted points P in the thus-set coordinate system (XYZ coordinate system, XZ coordinate system, or the like) are acquired from the coordinate data table 135, and a fitted line of the sets of plotted points P in the coordinate system is displayed.
Another modification is possible in which before a fitted line is displayed, sets of coordinates on two arbitrary coordinate axes contained in the coordinate data table 135 are read out and points corresponding to the read-out sets of coordinates are plotted (displayed). For example, in the above-described example operations, whereas in the initial state the coordinates on only the time axis T are contained in the coordinate data table 135 (see Fig. 3), after execution of the information display process sets of coordinates on the X and Y axes are contained in the coordinate data table 135. Two of any coordinate axes (e.g., X axis and T axis) used in the coordinate data table 135 are selected and points corresponding to the respective sets of X and Y coordinates are plotted (displayed) in the XT coordinate system. This is more effective in learning of a physical phenomenon.
Although the embodiment employs the orthogonal coordinate system, another type of coordinate system such as an oblique coordinate system or a polar coordinate system may be employed.

In the embodiment, after a specified image file 132S is determined at step S2, a plural image plotting mode process or a single image plotting mode process is executed by determining a type of the specified image file 132S. However, the following modification is possible. Steps T1-T8 are executed without making the above determination. If it is determined when step T8 is executed for the first time that the specified image file 132S includes (n + 1)th (i.e., second) image data 133 (T8: yes), step T9 and steps T3-T8 are executed repeatedly. The information display process is finished after execution of step S5. On the other hand, if it is determined when step T8 is executed for the first time that the specified image file 132S includes (n + 1)th (i.e., second) image data 133 (T8: No), step V9 and steps V4-V8 are executed repeatedly. The information display process is finished after execution of step S5.

Although in the embodiment the image of each image data 133 is one of images taken consecutively or an image obtained by combining images taken consecutively, the analysis subject image may be an image, such as an image of a spring obtained by shooting a parabolic water flow, that is not one of images taken consecutively nor an image derived from images taken consecutively. In this case, individual points in the water flow are analysis subject points for plotting.

While the present invention has been shown and described with reference to certain exemplary embodiments thereof, it will be understood by those skilled in the art that various changes in form and details may be made therein without departing from the spirit and scope of the invention as defined by the appended claims. It is aimed, therefore, to cover in the appended claim all such changes and modifications as fall within the true spirit and scope of the present invention.

## Claims

1. An information display apparatus comprising:
an image file storing unit configured to store at least one image file including a plurality of image data;
an image file specifying unit configured to specify one of said at least one image file according to a user operation;
an image display controller configured to display, on a display screen, one of the plurality of image data included in the specified image file;
a plotting operation receiver configured to receive a user plotting operation that is performed on a targeted analysis point in the displayed image data, wherein a plot point is plotted on the display screen according to the user plotting operation; and
a plotting display controller configured to sequentially display the plurality of image data included in the specified image file while displaying a plurality of plot points plotted on the display screen according to a plurality of user plotting operations.

2. The apparatus of claim **1,** further comprising:
a coordinate system setting unit configured to set, on the display screen, a coordinate system represented by first and second coordinate axes; and
a graph display controller configured to:
i) acquire coordinates of the plurality of plot points in the coordinate system;
ii) calculate a fitted line corresponding to the plurality of plot points; and
iii) display the calculated fitted line in the coordinate system.

3. The apparatus of claim **2**,
wherein the image file has coordinate range data representing a coordinate system range that is set according to an image display area of the display screen, and
wherein the coordinate system setting unit is configured to set a coordinate system having the coordinate system range in the image display area of the display screen.

4. The apparatus of claim **2,**
wherein the image file storing unit comprises: a coordinates storing unit configured to store the coordinates of the plot points in the specified image file, wherein the coordinates are stored in a data table form, and
wherein the graph display controller is configured to acquire the coordinates of the plot points from the coordinates storing unit.

5. The apparatus of claim **4,**
wherein the coordinate system setting unit is configured to set, on the display screen, a second coordinate system represented by at least one of the first and second coordinate axes and a third coordinate axis that is different from the first and second coordinate axes,
wherein the coordinates storing unit is configured to store coordinates on the third coordinate axis of the plot points such that the coordinates on the third coordinate axis are correlated with the coordinates on the first and second coordinate axes, and
wherein the graph display controller is configured to acquire the coordinates of the plot points in the second coordinate system from the coordinates storing unit,
the information display apparatus further comprising:
a second graph display controller configured to:
i) calculate a fitted line corresponding to the plot points in the second coordinate system; and
ii) display the calculated fitted line in the second coordinate system.

6. The apparatus of claim **1,**
wherein the image file storing unit is configured to store an image file including only one image data,
wherein when the image file specifying unit specifies the image file having the only one image data, the plotting display controller continue to display the only one image data while displaying the plurality of plot points plotted on the display screen according to the plurality of user plotting operations.

7. A computer readable medium storing a program for causing the computer to perform operations comprising:
(a) storing at least one image file including a plurality of image data;
(b) specifying one of said at least one image file according to a user operation;
(c) displaying, on a display screen, one of the plurality of image data included in the specified image file;
(d) receiving a user plotting operation that is performed on a targeted analysis point in the displayed image data, wherein a plot point is plotted on the display screen according to the user plotting operation; and
(e) sequentially displaying the plurality of image data included in the specified image file while displaying a plurality of plot points plotted on the display screen according to a plurality of user plotting operations.

8. The computer readable medium of claim **7,**
wherein the operations performed by the computer further comprise:
(f) setting, on the display screen, a coordinate system represented by first and second coordinate axes;
(g) acquiring coordinates of the plurality of plot points in the coordinate system;
(h) calculating a fitted line corresponding to the plurality of plot points; and
(i) displaying the calculated fitted line in the coordinate system.

9. The computer readable medium of claim **8,**
wherein the image file has coordinate range data representing a coordinate system range that is set according to an image display area of the display screen, and
wherein step (f) comprises: setting a coordinate system having the coordinate system range in the image display area of the display screen.

10. The computer readable medium of claim **8,**
wherein step (a) comprises: storing the coordinates of the plot points in the specified image file, wherein the coordinates are stored in a data table form, and
wherein step (g) comprises: acquiring the coordinates of the plot points.

11. The computer readable medium of claim **10**
wherein step (f) comprises: setting, on the display screen, a second coordinate system represented by at least one of the first and second coordinate axes and a third coordinate axis that is different from the first and second coordinate axes,
wherein step (a) comprises: storing coordinates on the third coordinate axis of the plot points such that the coordinates on the third coordinate axis are correlated with the coordinates on the first and second coordinate axes, and
wherein step (g) comprises: acquiring the coordinates of the plot points in the second coordinate system from the coordinates storing unit,
wherein the operations performed by the computer further comprise:
(j) calculating a fitted line corresponding to the plot points in the second coordinate system; and
(k) displaying the calculated fitted line in the second coordinate system.

12. The computer readable medium of claim **7,**
wherein step (a) comprises: storing an image file including only one image data,
wherein when specifying the image file having the only one image data, step (e) comprises: continuing to display the only one image data while displaying the plurality of plot points plotted on the display screen according to the plurality of user plotting operations.

13. An information display apparatus comprising:
a display unit having a touch panel;
a memory; and
a processor provided to be accessible to the memory, the processor being operable to perform operations comprising:
(a) storing at least one image file including a plurality of image data;
(b) specifying one of said at least one image file according to a user operation;
(c) displaying, on a display screen, one of the plurality of image data included in the specified image file;
(d) receiving a user plotting operation that is performed on a targeted analysis point in the displayed image data, wherein a plot point is plotted on the display screen according to the user plotting operation; and
(e) sequentially displaying the plurality of image data included in the specified image file while displaying a plurality of plot points plotted on the display screen according to a plurality of user plotting operations.

14. The apparatus of claim **13,** wherein the operations performed by the processor further comprise:
(f) setting, on the display screen, a coordinate system represented by first and second coordinate axes;
(g) acquiring coordinates of the plurality of plot points in the coordinate system;
(h) calculating a fitted line corresponding to the plurality of plot points; and
(i) displaying the calculated fitted line in the coordinate system.

15. The apparatus of claim **14,**
wherein the image file has coordinate range data representing a coordinate system range that is set according to an image display area of the display screen, and
wherein step (f) comprises: setting a coordinate system having the coordinate system range in the image display area of the display screen.

16. The apparatus of claim **14,**
wherein step (a) comprises: storing the coordinates of the plot points in the specified image file, wherein the coordinates are stored in a data table form, and
wherein step (g) comprises: acquiring the coordinates of the plot points.

17. The computer readable medium of claim **16**
wherein step (f) comprises: setting, on the display screen, a second coordinate system represented by at least one of the first and second coordinate axes and a third coordinate axis that is different from the first and second coordinate axes,
wherein step (a) comprises: storing coordinates on the third coordinate axis of the plot points such that the coordinates on the third coordinate axis are correlated with the coordinates on the first and second coordinate axes, and
wherein step (g) comprises: acquiring the coordinates of the plot points in the second coordinate system from the coordinates storing unit,
wherein the operations performed by the processor further comprise:
(j) calculating a fitted line corresponding to the plot points in the second coordinate system; and
(k) displaying the calculated fitted line in the second coordinate system.

18. The apparatus of claim **13,**
wherein step (a) comprises: storing an image file including only one image data,
wherein when specifying the image file having the only one image data, step (e) comprises: continuing to display the only one image data while displaying the plurality of plot points plotted on the display screen according to the plurality of user plotting operations.
